# EUROPÄISCHE PATENTSCHRIFT

(11) **EP 3 847 892 B1**
(45) Veröffentlichungstag und Bekanntmachung des Hinweises auf die Patenterteilung: **05.06.2024**
(21) Anmeldenummer: 20151030.2
(22) Anmeldetag: 09.01.2020
(51) Int. Cl.: A22C 11/02, B01F 27/1143, B01F 27/724

(54) **VORRICHTUNG UND VERFAHREN ZUM VERARBEITEN EINER LEBENSMITTELMASSE**
DEVICE AND METHOD FOR PROCESSING A FOOD MASS
DISPOSITIF ET PROCÉDÉ DE TRAITEMENT D'UNE PÂTE ALIMENTAIRE

(43) Veröffentlichungstag der Anmeldung: 14.07.2021
(73) Patentinhaber: Freddy Hirsch Group AG, 6331 Hünenberg (CH)
(72) Erfinder: Knodel, Peter, 28876 Oyten (DE); Wagner, Mitja, 27313 Dörverden (DE); Wesemann, Fritjof, 28832 Achim (DE); Walger, Johann, 27299 Langwedel (DE); Brecht, Oliver, 27324 Eystrup (DE)
(74) Vertreter: Eisenführ Speiser

(56) Entgegenhaltungen:
- EP-A1- 1 371 293
- DE-T2- 69 803 233
- DE-T2- 69 814 665
- FR-A- 1 133 446
- US-B1- 7 144 316

## Beschreibung

Die Erfindung bezieht sich auf eine Vorrichtung zum Erzeugen eines Wurststranges aus einer Lebensmittelmasse mit im Wesentlichen zylindrischer Außenkontur, insbesondere aus Fleischbrät, mit einem feststehenden, eine Wandung aufweisenden Gehäuse, welches fluidleitend mit einer Förderpumpe verbindbar ist und eine Austrittsöffnung zum Abgeben der Lebensmittelmasse aufweist wobei innerhalb des Gehäuses ein relativ zur Wandung rotierbares Element zum teilweisen Verwirbeln der Lebensmittelmasse innerhalb des Gehäuses angeordnet ist, und wobei das rotierbare Element innerhalb des Gehäuses vor der Austrittsöffnung zum Abgeben der Lebensmittelmasse endet.

Des Weiteren bezieht sich die Erfindung auch auf eine Maschine zum Herstellen eines Wurststranges aus einer Lebensmittelmasse sowie ein Verfahren zum Erzeugen eines Wurststranges aus einer Lebensmittelmasse.

Vorrichtungen und Verfahren vorbezeichneter Gattung werden üblicherweise zum Herstellen von Wurststrängen verwendet. Insbesondere werden solche Vorrichtungen eingesetzt, um Wurststränge mit im Wesentlichen zylindrischer Außenkontur und einem auf die Außenseite eines Wurststranges aufgebrachten Hüllmaterials vorzugsweise im Wesentlichen kontinuierlich herzustellen. Die Lebensmittelmasse, insbesondere das Wurstbrät, wird üblicherweise in einem Fülltrichter einer Herstellungsmaschine für Würstchen bereitgehalten und mittels einer Förderpumpe zum Erzeugen eines kontinuierlichen Förderstromes der Lebensmittelmasse in Richtung einer Austrittsöffnung eines insbesondere eine feststehende Wandung aufweisenden Gehäuses gefördert.

Statt die Lebensmittelmasse in eine Hülle, wie beispielsweise einen Kunstdarm oder Naturdarm, einzugeben kann auf die Außenseite der Lebensmittelmasse auch ein zunächst fließfähiges und später aushärtendes Hüllmaterial aufgebracht werden. Das Hüllmaterial schützt die Lebensmittelmasse auch unter hygienischen Gesichtspunkten und verleiht dem erzeugten Lebensmittelmasse-Strang eine erhöhte Festigkeit, wodurch ein ungewolltes Brechen des Stranges erschwert oder vermieden werden soll. Als Hüllmaterial zum Aufbringen auf die Oberfläche des erzeugten Stranges wird zum Beispiel Collagen oder Alginat verwendet. Collagen und Alginat sind fließfähige Hüllmaterialien, die sich nach dem Aufbringen auf die Strangoberfläche nach relativ kurzer Zeitdauer verfestigen und eine feste Hülle an dem Lebensmittelmasse-Strang ausbilden.

Bei einer sich an die Herstellung des aus der Lebensmittelmasse erzeugten Wurststranges anschließenden Weiterverarbeitung, insbesondere bei einem Kochvorgang, kann ein Schrumpfen des Wurststranges auftreten, vornehmlich in Längsrichtung der erzeugten Würste. Die hergestellten Würste schrumpfen demnach während des Kochprozesses überproportional in ihrer Länge. Das überproportionale Schrumpfen in Längsrichtung (auch unter Längsschrumpfen bekannt) ist vornehmlich auf die Ausrichtung der Struktur der verarbeiteten Lebensmittelmasse zurückzuführen, insbesondere auf die Ausrichtung der Fasern in der Lebensmittelmasse, bevorzugt des zu verarbeitenden Fleischbräts. Im Vergleich zu der Lebensmittelmasse schrumpft das den Lebensmittelmasse-Strang bzw. die einzelnen Strangabschnitte umgebende Hüllmaterial nicht oder nur sehr gering. Daher können die fertigen Strangabschnitte oder Würstchen nach einem durchlaufenen Kochprozess eine unerwünschte gewellte bzw. faltige Oberfläche aufweisen. Zudem kann gleichzeitig mit dem Verkürzen des Stranges oder der Würste in Längsrichtung eine Vergrößerung im Durchmesser auftreten, sodass insgesamt unerwünschte Maßabweichungen der Wurst entstehen. Dadurch erhalten die hergestellten Würste häufig ein für den Endverbraucher unansprechendes Äußeres.

Aus DE 698 03 233 T2 ist ein Verfahren und eine Vorrichtung zum Extrudieren von pastösen Lebensmittelsubstraten bekannt. Die Vorrichtung umfasst ein erstes festes Formteil, das eine zylindrische Bohrung definiert. Die Vorrichtung umfasst ferner ein in der Bohrung im festen Formteil drehbar aufgenommenes Innenrohr. Das Innenrohr endet vor dem Auslass des feststehenden Außenrohres und ist als Düse zum Extrudieren eines oder mehrerer pastöser Lebensmittelsubstrate ausgebildet. Das Innenrohr weist mindestens einen außermittig zur Längsachse des Innenrohres verlaufenden Kanal auf, so dass das die Düse verlassende Substrat eine schrauben- oder wendelförmige Außenkontur hat

US 7,144,316 B1 betrifft eine Schneckenvorrichtung für eine Düse einer Wurstherstellungsmaschine. Die Schneckenvorrichtung umfasst einen Hohlkörper mit einem Einlass und einem Auslass und einer sich zwischen Einlass und Auslass erstreckenden Förderstrecke. In der Förderstrecke ist ein Rotationskörper mit einer ersten Schnecke und einer sich an die erste Schnecke anschließenden zweiten Schnecke angeordnet.

Der Erfindung liegt daher die Aufgabe zugrunde, eine Vorrichtung oder Maschine bzw. ein Verfahren zum Verarbeiten einer Lebensmittelmasse aufzuzeigen, mit denen das Schrumpfverhalten der hergestellten Würste in Längsrichtung bei einem sich an dem Herstellungsprozess anschließenden Kochprozess beeinflusst werden kann.

Die Erfindung löst die ihr zugrundeliegende Aufgabe bei einer Vorrichtung der vorbezeichneten Gattung mit den Merkmalen des Gegenstands von Anspruch 1.

Erfindungsgemäß ist das rotierbare Element ein Zuführrohr, durch das im Betrieb mindestens eine Teilmenge zu fördernden Lebensmittelmasse strömt, und wobei das Zuführrohr (12) innerhalb des feststehenden Gehäuses (6) einen im Wesentlichen konstanten Strömungsquerschnitt hat, um einen Strang mit im Wesentlichen zylindrischer Außenkontur abzugeben. Das rotierbare Element erstreckt sich also in Richtung seiner Längsachse nicht bis an die Austrittsöffnung des Gehäuses, sondern hält einen Abstand zu dieser. Zwischen dem Ende des rotierbaren Elements und der Austrittsöffnung ist bevorzugt ein Teilraum innerhalb des Gehäuses ausgebildet. In diesen, sich vorzugsweise etwas erweiterten, Teilraum strömt im Betrieb die Lebensmittelmasse ein, welche darin weniger oder nicht mehr von der Rotation des rotierbaren Elementes beeinflusst wird. Ferner hat das Zuführrohr innerhalb des feststehenden Gehäuses einen im Wesentlichen konstanten Strömungsquerschnitt, wobei das Zuführrohr selbst bevorzugt einen über seine Gesamtlänge gleichmäßigen Querschnitt aufweist.

Erfindungsgemäß wird der Ansatz verfolgt, dass mit dem rotierbaren Element innerhalb des Gehäuses die Lebensmittelmasse - in dem Teilraum - vor der Austrittsöffnung zum Abgeben der Lebensmittelmasse wenigstens etwas verwirbelt wird. Es entsteht eine weniger homogene Ausrichtung von etwaigen Fasern in der Lebensmittelmasse. Im Gegensatz zu den aus dem Stand der Technik bekannten Vorrichtungen wird erfindungsgemäß erreicht, dass die Lebensmittelmasse, mit Abgeben aus der Austrittsöffnung, mit ihren Fasern nicht mehr vorrangig in Längsrichtung oder Erstreckungsrichtung des erzeugten Stranges ausgerichtet ist. Vielmehr weisen die Fasern eine wenigstens stärker ungerichtete Ausrichtung bzw. eine Abweichung in ihrer Faserausrichtung zur Längsrichtung auf. Erfindungsgemäß weist die Lebensmittelmasse hinsichtlich ihrer Ausrichtung der Fasern eine inhomogenere Struktur auf. Dadurch wird erreicht, dass die Wurst gleichmäßiger in Richtung Ihrer Längserstreckung und Quererstreckung schrumpft. Zudem tritt eine geringere Wellen- oder Faltenbildung an der Hülle auf. Insgesamt kann das Erscheinungsbild und die Maßhaltigkeit der Wurst verbessert werden.

Gemäß einer bevorzugten Ausführungsform der erfindungsgemäßen Vorrichtung liegt der Abstand zwischen der Austrittsöffnung des Gehäuses und einem Auslass oder Ende des rotierbaren Elementes im Bereich von > 0 bis etwa 100 mm, bevorzugt im Bereich von > 0 bis etwa 50 mm, und/oder das rotierbare Element ist konzentrisch innerhalb des feststehenden Gehäuses angeordnet. Mithilfe des Abstandes zwischen der Austrittsöffnung am feststehenden Gehäuse und dem Auslass oder Ende des Elementes in den erfindungsgemäß angegebenen Grenzen wird eine bevorzugte Durchmischung und/oder Verwirbelung bzw. abweichende Ausrichtung der Fasern zur Längsachse des zu erzeugenden Stranges bzw. Strangabschnittes der Lebensmittelmasse erreicht. Dabei kann die Größe des Abstandes zwischen der Austrittsöffnung des Gehäuses und dem Auslass oder Ende am Element - unter Ausbildung eines Teilraumes innerhalb des Gehäuses vor der Austrittsöffnung - variiert werden. Die Größe des Abstandes variiert auch in Abhängigkeit von den Abmessungen im Durchmessers des Gehäuses und dem darin drehbar angeordneten rotierbaren Element. Bevorzugt ist, wenn der Durchmesser von Gehäuse und rotierbarem Element an der erfindungsgemäßen Vorrichtung zunimmt, der Abstand zwischen der Austrittsöffnung und dem Auslass oder Ende größer zu wählen, um eine gewünschte Verwirbelung der Fasern in der Lebensmittelmasse zu erreichen. Vorzugsweise verjüngt sich entlang eines Abschnittes des Teilraumes dessen Durchmesser kegelförmig. In einer Ausführungsform der Erfindung ist die Austrittsöffnung am feststehenden Gehäuse somit kleiner als der Durchmesser des Teilraumes des feststehenden Gehäuses im Übergangsbereich vom Auslass oder Ende des rotierbaren Elementes in den Teilraum.

In einer bevorzugten Weiterbildung der vorliegenden Erfindung ist das rotierbare Element konzentrisch innerhalb des feststehenden Gehäuses angeordnet. Durch den bevorzugt gleichmäßigen Abstand von der äußeren Umfangsfläche zur Innenseite des feststehenden Gehäuses entlang des gesamten Umfangs des entlang des rotierbaren Elementes strömenden Stranges der Lebensmittelmasse ist darüber hinaus eine bevorzugt gleichmäßige Verwirbelung der Fasern innerhalb der Lebensmittelmasse erzielt.

Vorzugsweise ist das rotierbare Element mittels einer Antriebseinheit in Rotation versetzbar und dazu eingerichtet, zumindest eine Teilmenge der zu fördernden Lebensmittelmasse beim Durchströmen des Gehäuses in Längsrichtung zusätzlich in eine Bewegung mit mindestens einer rotatorischen Bewegungskomponente relativ zur Längsachse des Gehäuses zu versetzen. Bevorzugt wird der im Wirkbereich des rotierbaren Elementes befindliche Teil der Lebensmittelmasse relativ zu dem Teil der Lebensmittelmasse, der unmittelbar zuvor den Wirkbereich des rotierbaren Elementes verlassen hat, um ein bestimmtes Winkelmaß bewegt. Insbesondere wird der im Wirkbereich des rotierbaren Elementes befindliche Teil der Lebensmittelmasse fortwährend verwirbelt oder rotiert, wodurch eine kontinuierliche Änderung der Struktur, insbesondere der Ausrichtung der Fasern der Lebensmittelmasse erreicht wird. Bevorzugt wird das rotierbare Element kontinuierlich oder diskontinuierlich von der Antriebseinheit in Rotation versetzt, wobei gleichzeitig mittels eines innerhalb eines Zuführrohres und/oder des feststehenden Gehäuses wirkenden Förderdruckes die Lebensmittelmasse weiterhin in Längsrichtung des Zuführrohres und des feststehenden Gehäuses gefördert wird. Mittels der Verwirbelung oder Rotation der den Auslass oder das Ende des rotierbaren Elementes verlassenen Lebensmittelmasse erfolgt, insbesondere im Übergang zwischen dem Auslass oder Ende des Elementes und dem nachgeordneten Abschnitt am feststehenden Gehäuse, wegen der Relativbewegung von Element und Gehäuse zueinander, eine Bewegung der Lebensmittelmasse mit mindestens einer rotatorischen Bewegungskomponente relativ zur Längsachse des Gehäuses. Bevorzugt werden die Fasern der durch das Gehäuse und das Zuführrohr geförderten Lebensmittelmasse zumindest teilweise in Umfangsrichtung des erzeugten Stranges oder der Strangabschnitte ausgerichtet.

Eine Weiterbildung der erfindungsgemäßen Vorrichtung sieht vor, dass das rotierbare Element dazu eingerichtet ist, die Struktur der im Abschnitt des Gehäuses zwischen dessen Austrittsöffnung und dem Auslass oder Ende des rotierbare Elementes strömenden Lebensmittelmasse, aufgrund der Relativbewegung zwischen dem Zuführrohr und dem feststehenden Gehäuse, im Wesentlichen spiralförmig auszurichten. Durch die einander überlagernde Rotation des rotierbaren Elementes relativ zur Wandung des Gehäuses und die Förderbewegung der Lebensmittelmasse in dessen Längsrichtung werden insbesondere die Fasern innerhalb der Lebensmittelmasse mit Übergang in den feststehenden Teil des Gehäuses inhomogen, insbesondere etwa spiralförmig um die Längsachse des erzeugten Stranges bzw. der Strangabschnitte ausgerichtet. Bei einem sich an die Herstellung der Strangabschnitte aus der Lebensmittelmasse anschließenden Kochprozess erfolgt, durch die bevorzugt spiralförmige Ausrichtung der Fasern innerhalb der Strangabschnitte, eine Beeinflussung des Schrumpfverhaltens jedes Strangabschnittes in Längsrichtung und bevorzugt auf dessen Querschnittsabmessungen. Mit den inhomogen, insbesondere spiralförmig ausgerichteten Fasern wird das Schrumpfen der Strangabschnitte in Längsrichtung auf ein vorbestimmtes Verhältnis begrenzt. Bevorzugt liegt das Verhältnis zwischen der nach dem Kochprozess vorliegenden Endlänge und der Ausgangslänge des Strangabschnittes vor dem Kochprozess bei > 0,85, bevorzugt bei > 0,92. Zudem ist mit dem insbesondere spiralförmigen Ausrichten der Fasern innerhalb der Lebensmittelmasse statt einer Zunahme im Durchmesser der Strangabschnitte eine geringfügige Reduzierung erzielt. Die erzeugten und gekochten Strangabschnitte erhalten somit im Vergleich zu herkömmlich hergestellten und/oder weiterverarbeiteten Strangabschnitten ein für das Auge ansprechenderes Äußeres.

Erfindungsgemäß ist das rotierbare Element ein rotierbares Zuführrohr, welches innerhalb des Gehäuses vor der Austrittsöffnung zum Abgeben der Lebensmittelmasse endet und durch welches im Betrieb mindestens eine Teilmenge der zu fördernden Lebensmittelmasse strömt. Die Lebensmittelmasse strömt damit im Inneren entlang des Zuführrohres. Durch Ausgeben der Lebensmittelmasse aus dem Zuführrohr in das feststehende Gehäuse in den Teilraum vor der Austrittsöffnung und wegen der bevorzugt fortwährenden Relativbewegung zwischen rotierendem Zuführrohr und Gehäuse wird eine Änderung der Faserausrichtung zur Förderrichtung der Lebensmittelmasse bewirkt. Die Struktur der Lebensmittelmasse, insbesondere die Faserausrichtung verläuft weniger parallel zur Förderrichtung der Lebensmittelmasse. Durch das Austreten der Lebensmittelmasse aus dem rotierbaren Zuführrohr in den Teilraum des Gehäuses vor der Austrittsöffnung zum Abgeben der Lebensmittelmasse aus dem Gehäuse kommt es noch innerhalb des Gehäuses zu einer Neuausrichtung der Struktur bzw. Fasern der Lebensmittelmasse, sodass etwaige Fasern innerhalb der Lebensmittelmasse stärker verteilt werden und weniger homogen ausgerichtet sind. Insbesondere bei einem sich an den Herstellschritt anschließenden Kochprozess ist das Schrumpfverhalten in Längsrichtung, aufgrund der veränderten, weniger homogene Ausrichtung der Fasern innerhalb des hergestellten Stranges oder der einzelnen Strangabschnitte, geringer, als bei einem Strangabschnitt mit stärker oder sogar ausschließlich in Längsrichtung verlaufenden Fasern. Zudem wird durch die veränderte bzw. ungerichtete Ausrichtung der Fasern im Lebensmittelmasse-Strang einer Vergrößerung des Querschnitts der Strangabschnitte vorteilhaft entgegengewirkt. Insgesamt ist das Aussehen und geometrische Maß der Wurst verbessert. Eine unerwünschte Wellenbildung der Hülle ist reduziert.

Bevorzugt strömt die Lebensmittelmasse im Betrieb der Vorrichtung sowohl durch das rotierbare Zuführrohr als auch durch einen zwischen dem Zuführrohr und dem Gehäuse ausgebildeten, im Wesentlichen ringförmigen Kanal koaxial hindurch. Mithilfe des um das Zuführrohr ausgebildeten Ringkanals ist bevorzugt eine Art zweischichtiges Produkt ausgebildet. Erzeugte Strangabschnitte weisen vorzugsweise einen Kern aus der Lebensmittelmasse mit zur Längsrichtung des Strangabschnittes verändert ausgerichteten Fasern auf, als die den Kern umgebende Hülle aus der Lebensmittelmasse, deren Fasern im Wesentlichen in Längsrichtung verlaufen. Eine derartige Ausgestaltung ermöglicht eine gezielte Einflussnahme auf das Schrumpfverhalten der herzustellenden Strangabschnitte bzw. Würste. Insbesondere durch Verändern bzw. Einstellen der Stärke der den Kern umgebenden Hülle aus der Lebensmittelmasse mit im Wesentlichen in Längsrichtung verlaufenden Fasern, lässt sich gezielt Einfluss auf das Schrumpfen der Strangabschnitte in Längsrichtung bei einem sich anschließenden Kochprozess nehmen.

Bevorzugt ist in einer Ausführungsform der das Zuführrohr umgebende Ringkanal einstellbar. Dies kann beispielsweise durch Einsetzen einer sich an die Innenseite des feststehenden Gehäuses anliegenden Buchse erfolgen, welche sich entlang eines Abschnittes des Gehäuses ertstreckt. Vorzugsweise liegt der Innendurchmesser des Gehäuses zum Außendurchmesser des rotierbaren Zuführrohres in einem Verhältnis im Bereich von > 1 bis etwa 2. In einer Ausführungsform, in der das Verhältnis zwischen dem Innendurchmesser des Gehäuses und dem Außendurchmesser des Zuführrohres nur wenig größer als 1 ist, existiert kein Ringspalt, durch den ein Teil der zu fördernden Lebensmittelmasse strömen würde. Die zu fördernde Lebensmittelmasse strömt somit ausschließlich durch das relativ zum Gehäuse rotierbare Zuführrohr.

In einer weiteren Ausführungsform kann der Außendurchmesser des Zuführrohres halb so groß sein wie der Innendurchmesser des Gehäuses. Das Verhältnis zwischen Innendurchmesser Gehäuse und Außendurchmesser Zuführrohr kann vorzugsweise in den vorliegend aufgezeigten Grenzen beliebig gewählt werden. Dadurch können die Dickenabmessungen des "zweischichtigen" Produktes der herzustellenden Strangabschnitte angepasst werden, um das gewünschte Schrumpfverhalten in Längs- und in Dickenrichtung zu erreichen.

Gemäß einer bevorzugten Weiterbildung weist das Gehäuse einen Abschnitt mit einem sich in Förderrichtung der Lebensmittelmasse verringernden Strömungsquerschnitt auf. Mithilfe des sich verringernden Strömungsquerschnitts im feststehenden Gehäuse ist eine beschleunigte Förderbewegung der sich außen um das Zuführrohr strömenden Teilmenge der Lebensmittelmasse erreicht. Insbesondere kann der Einfluss der außen um das Zuführrohr geförderten Teilmenge der Lebensmittelmasse auf die Eigenschaften der hergestellten Strangabschnitte angepasst werden. Das feststehende Gehäuse ist in einer bevorzugten Ausführungsform als Förderleitung für die Lebensmittelmasse ausgebildet.

Ferner ist erfindungsgemäß bevorzugt vorgesehen, dass das rotierbare Element mit einer Antriebseinheit gekoppelt ist, die dazu eingerichtet ist, das rotierbare Element bevorzugt in eine kontinuierlich oder stufenweise einstellbare Rotationsbewegung zu versetzen. Vorzugsweise kann die Drehbewegung des rotierbaren Elementes, insbesondere des Zuführrohres, im Verhältnis zur Förderbewegung der durch das Zuführrohr geförderten Lebensmittelmasse verändert werden. Dadurch kann die Ausrichtung der Fasern innerhalb der Lebensmittelmasse variiert und Einfluss auf das Schrumpfverhalten der Lebensmittelmasse insgesamt bzw. eines aus der Lebensmittelmasse hergestellten Strangabschnittes genommen werden. Vorzugsweise ist die mit dem rotierbaren Element gekoppelte Antriebseinrichtung signalleitend mit einer Steuereinrichtung verbunden, mittels der bevorzugt auch gleichzeitig die Förderbewegung der Lebensmittelmasse innerhalb des drehbaren oder feststehenden Zuführrohres mittels einer durch die Steuereinrichtung angesteuerten Förderpumpe geregelt wird. Die Antriebseinheit weist bevorzugt ein Antriebsmittel auf, das bevorzugt über ein Stirnradgetriebe mit dem drehbar gelagerten Zuführrohr zusammenwirkt.

Gemäß einer bevorzugten Weiterbildung kooperiert das Gehäuse mit einem Extrusionskopf zum Ausgeben eines Stranges der Lebensmittelmasse, wobei der Extrusionskopf vorzugweise als Koextrusionskopf zum Ausgeben der Lebensmittelmasse und eines die Lebensmittelmasse umgebenden Hüllmaterials ausgebildet ist. Vorzugsweise wird an der Austrittsöffnung des feststehenden Gehäuses die Lebensmittelmasse insbesondere als kontinuierlich austretender Strang abgegeben. Das Ende des feststehenden Gehäuses ist somit als Extrusionskopf ausgebildet. In einer bevorzugten Ausgestaltung ist der Extrusionskopf ein Koextrusionskopf. Neben der als kontinuierlich geförderter Strang ausgebildeten Lebensmittelmasse wird zusätzlich ein Hüllmaterial ausgegeben, das beim Abgeben aus dem Koextrusionskopf bevorzugt auf die Außenseite des Stranges aus der Lebensmittelmasse aufgetragen wird. Das Hüllmaterial umgibt bevorzugt die austretende Lebensmittelmasse vollumfänglich.

Vorzugsweise ist der Koextrusionskopf mittels eines Maschinengestells ortsfest gelagert und weist eine Aufnahmekammer für das fließfähige, bevorzugt aushärtbare Hüllmaterial, insbesondere Alginat oder Collagen, auf. Durch die ortsfeste Lagerung des Koextrusionskopfes ist insbesondere die feststehende Ausgestaltung des Gehäuses erreicht, innerhalb dessen das Ausrichten der Fasern der zu fördernden Lebensmittelmasse mit ihrer zur Längsrichtung bzw. Förderrichtung der Lebensmittelmasse abweichenden Ausrichtung bewirkt ist. Der Koextrusionskopf weist wenigstens eine Aufnahmekammer für das fließfähige Hüllmaterial auf, von der aus das Hüllmaterial direkt auf die äußere Oberfläche des erzeugten Stranges aus der Lebensmittelmasse aufgebracht wird. Das vorzugsweise zum Umhüllen des Stranges verwendete Alginat oder Collagen hat die Eigenschaft, nach relativ kurzer Zeit auszuhärten und somit der Oberfläche des Stranges eine erhöhte Festigkeit zu verleihen. Damit ist einem ungewollten Unterteilen des erzeugten Lebensmittelstranges entgegengewirkt.

Vorzugsweise weist die Aufnahmekammer eine Auslassöffnung auf, die vorzugsweise der Austrittsöffnung des feststehenden Gehäuses zugeordnet ist, sodass das fließfähige Hüllmaterial mit Austritt aus der Auslassöffnung unmittelbar auf die Oberfläche des erzeugten Stranges aus der Lebensmittelmasse abgegeben wird. Damit erfolgt bevorzugt ein unmittelbarer Auftrag des Hüllmaterials auf die äußere Oberfläche des erzeugten Stranges, womit eine feste Verbindung zwischen der äußeren Oberfläche und dem Hüllmaterial erzielt wird. Die Auslassöffnung erstreckt sich zumindest bereichsweise entlang der bevorzugt an der Auslassöffnung der Aufnahmekammer für das Hüllmaterial vorbeiströmenden äußeren Oberfläche des Lebensmittelmasse-Stranges.

Eine Weiterbildung der erfindungsgemäßen Vorrichtung sieht vor, dass die Auslassöffnung ein konzentrisch zum Gehäuse angeordneter Ringspalt ist, der dazu eingerichtet ist, dass Hüllmaterial im Wesentlichen in radialer Richtung nach innen auf die Oberfläche des erzeugten Stranges abzugeben. Mit der Ausgestaltung der Auslassöffnung als Ringspalt ist erreicht, dass die äußere Oberfläche des Stranges aus der Lebensmittelmasse vollumfänglich mit dem zu überziehenden Hüllmaterial in Kontakt gelangt. Mit dem bevorzugt radial nach innen abgegebenen Hüllmaterial ist zudem ferner bewirkt, dass sich der erzeugte Lebensmittelmasse-Strang verbessert im Bereich der Austrittsöffnung des feststehenden Gehäuses ablöst und somit das kontinuierliche Herstellen des zu erzeugenden Stranges aus der Lebensmittelmasse mit Vorteil weiter verbessert ist.

Gemäß einer bevorzugten Weiterbildung der erfindungsgemäßen Vorrichtung weist das rotierbare Element an seiner äußeren Oberfläche und/oder an seiner inneren Oberfläche Vorsprünge und/oder Ausnehmungen, beispielsweise Nuten oder Aufrauungen, auf, um mit der Lebensmittelmasse eine erhöhte Reibung während der Rotation zu erzeugen. Im Endabschnitt eines Zuführrohres können kurz vor dem Auslass an dessen Innenseite und/oder Außenseite zusätzliche Strukturelemente ausgebildet bzw. angeordnet sein, mit denen die Haftverbindung der Lebensmittelmasse mit der inneren oder äußeren Oberfläche des rotierbaren Elementes verbessert wird. Insbesondere im Übergangsbereich zwischen dem Auslass oder dem Ende des rotierbaren Elementes und dem feststehenden Gehäuse ist bewirkt, dass die Lebensmittelmasse die gewünschte Relativbewegung zum feststehenden Gehäuse ausführt und sich nicht vorzeitig durch die innerhalb der Lebensmittelmasse wirkenden Bindungskräfte von der Oberfläche des rotierbaren Elementes ablöst. An der äußeren oder inneren Oberfläche des Zuführrohres kann im Endbereich jedes beliebige Strukturelement, wie beispielsweise eine Vertiefung, eine Aufrauung oder ein an der Oberfläche vorstehender Vorsprung vorgesehen sein, um die gewünschte Haftreibung zwischen Zuführrohr und Lebensmittelmasse sicherzustellen.

Die Erfindung betrifft eine Vorrichtung gemäß Anspruch 1, zum Verarbeiten einer Lebensmittelmasse, insbesondere zum Herstellen von Wurstprodukten aus Fleischbrät, mit einem feststehenden, eine Wandung aufweisenden Gehäuse, welches fluidleitend mit einer Förderpumpe verbindbar ist und eine Austrittsöffnung zum Abgeben der Lebensmittelmasse aufweist, und einem Koextrusionskopf zum Abgeben der Lebensmittelmasse und eines die Lebensmittelmasse umgebenden Hüllmaterials, der mit der Austrittsöffnung des Gehäuses kooperiert. Erfindungsgemäß ist innerhalb des Gehäuses ein relativ zur Wandung rotierbares Element zum teilweisen Verwirbeln der Lebensmittelmasse innerhalb des Gehäuses angeordnet, entlang dessen im Betrieb mindestens eine Teilmenge der zu fördernden Lebensmittelmasse strömt, und wobei das rotierbare Element innerhalb des Gehäuses vor der Austrittsöffnung zum Abgeben der Lebensmittelmasse endet.

Mit einer derartig ausgebildeten Vorrichtung zum Verarbeiten einer Lebensmittelmasse kann ein Strang der Lebensmittelmasse hergestellt werden, der von einem Hüllmaterial umgeben ist, wobei mittels des innerhalb des Gehäuses angeordneten rotierbaren Elementes die im Gehäuse strömende Lebensmittelmasse derart verwirbelt wird, dass die Fasern der Lebensmittelmasse eine Ausrichtung aufweisen, die verschieden zur Förderrichtung der Lebensmittelmasse ist. Damit kann insbesondere Einfluss auf das Schrumpfverhalten des Lebensmittelstranges oder mehrerer daraus hergestellter Strangabschnitte in Längsrichtung bei einem sich an die Herstellung anschließenden Kochprozess genommen werden. Das rotierbare Element endet vor der Auslassöffnung des Gehäuses. Damit ist erreicht, dass die noch im Wirkbereich des rotierbaren Elementes befindliche Lebensmittelmasse relativ zu der unmittelbar zuvor aus dem Wirkbereich des rotierbaren Elementes herausbewegten Lebensmittelmasse bewegt oder verwirbelt wird. Das rotierbare Element kann in einer Ausführungsform der vorliegenden Erfindung ein Stabelement sein, das innerhalb des feststehenden Gehäuses angeordnet ist. Insbesondere ist die Mittenachse des rotierbaren Elementes konzentrisch zur Mittenachse des feststehenden Gehäuses. Gemäß einer bevorzugten Weiterbildung können an dem als Stabelement ausgebildeten rotierbaren Element an seiner Umfangsfläche entsprechende Strukturelemente angeordnet sein, mit denen das Mitbewegen von zumindest einer Teilmenge des geförderten Lebensmittels innerhalb des feststehenden Gehäuses zusammen mit dem rotierenden Stabelement unterstützt wird. Die Strukturelemente können als Leitbleche oder Paddel ausgebildet sein.

Hinsichtlich vorteilhafter Ausführungsformen der Vorrichtung zum Verarbeiten einer Lebensmittelmasse gemäß dem zweiten erfindungsgemäßen Aspekt wird auf die vorstehenden Ausführungen zur Vorrichtung zum Verarbeiten einer Lebensmittelmasse gemäß dem ersten erfindungsgemäßen Aspekt verwiesen.

Gemäß einem weiteren Aspekt betrifft die vorliegende Erfindung eine Maschine zum Herstellen eines Wurststranges aus einer Lebensmittelmasse gemäß Anspruch 14 mit einem Fülltrichter zum Aufnehmen der Lebensmittelmasse, einer Förderpumpe zum Erzeugen eines Förderstromes der Lebensmittelmasse und einer Vorrichtung zum Verarbeiten einer Lebensmittelmasse, insbesondere von Fleischbrät, gemäß einer der vorstehend beschriebenen bevorzugten Ausführungsformen und/oder einer Fördermaschine zum Fördern von Hüllmaterial, die fluidleitend mit einem Extrusionskopf der Vorrichtung gekoppelt ist.

Die erfindungsgemäße Maschine zum Herstellen eines Wurststranges auch bezeichnet als Füllmaschine, löst die eingangs beschriebene Aufgabe mit einer Vorrichtung zum Verarbeiten einer Lebensmittelmasse gemäß den oben beschriebenen Ausführungsformen, wobei innerhalb des Gehäuses ein relativ zur Wandung rotierbares Element zum teilweisen Verwirbeln der Lebensmittelmasse innerhalb des Gehäuses angeordnet ist, entlang dessen im Betrieb mindestens eine Teilmenge der zu fördernden Lebensmittelmasse strömt, und wobei das rotierbare Element innerhalb des Gehäuses vor der Austrittsöffnung zum Abgeben der Lebensmittelmasse endet. Insbesondere wird erreicht, dass die Fasern innerhalb des hergestellten Lebensmittelstranges eine inhomogene Ausrichtung erhalten, die wenigstens teilweise verschieden zur Förderrichtung des Lebensmittelstranges ist. Insbesondere sind die Fasern spiralförmig um die Längsachse des erzeugten Wurststranges herum verdreht oder verwirkt. Damit ist erreicht, dass der hergestellte Strang bzw. der zu mehreren Strangabschnitten unterteilte Strang aus der Lebensmittelmasse in einem sich an die Herstellung anschließenden Kochprozess ein deutlich reduziertes Schrumpfverhalten in Längsrichtung der Strangabschnitte aufweist als herkömmlich hergestellte Strangabschnitte, deren Fasern wenigstens in einem größeren Ausmaß im Wesentlichen parallel zur Längsachse des Stranges verlaufen. Um den hergestellten Strang aus der Lebensmittelmasse in mehrere gleichlange Strangabschnitte zu unterteilen, weist die Maschine vorzugsweise eine Abteileinrichtung zum Unterteilen des geformten und bevorzugt mit einem Hüllmaterial überzogenen Lebensmittelstranges auf. Die Abteileinrichtung weist ein oder mehrere Trennmesser auf, die in den Förderweg des Stranges aus der Lebensmittelmasse in vordefinierten Abständen hineinbewegt werden. Auf die Beschreibungen zu den obigen Erfindungsaspekten und vorteilhaften Effekten wird ausdrücklich auch für die vorliegend aufgezeigte erfindungsgemäße Maschine Bezug genommen.

Noch ein weiterer Aspekt der vorliegenden Erfindung betrifft ein Verfahren gemäß Anspruch 15 zum Erzeugen eines Wurststranges aus einer Lebensmittelmasse, insbesondere aus Fleischbrät, mit den Schritten: Fördern der Lebensmittelmasse in Förderrichtung entlang eines Gehäuses mittels einer Förderpumpe, während des Förderns der Lebensmittelmasse Verwirbeln von, bevorzugt Erzeugen von zusätzlich einer rotatorischen Bewegungskomponente an Teilen der Lebensmittelmasse, um die Längsachse des Gehäuses mittels eines innerhalb des Gehäuses angeordneten, vor einer Austrittsöffnung des Gehäuses zum Abgeben der Lebensmittelmasse endenden rotierbaren Elements.

Mit dem Verwirbeln der Lebensmittelmasse, vorzugsweise dem Erzeugen von zusätzlich einer rotatorischen Bewegungskomponente an zumindest Teilen der geförderten Lebensmittelmasse, werden die Fasern innerhalb der Lebensmittelmasse in eine Ausrichtung gebracht, die verschieden zur Förderrichtung und damit zur Längsachse eines mittels der Lebensmittelmasse zu erzeugenden Stranges ist. Durch die zur Längsachse des Stranges bzw. der unterteilten Strangabschnitte ausgerichteten Fasern schrumpft bei einem sich an den Herstellungsprozess anschließenden Kochprozess ein jeweiliger Strangabschnitt deutlich geringer in Längsrichtung des Strangabschnittes als noch ein herkömmlich hergestellter Strangabschnitt. Mit Hilfe der erfindungsgemäßen Verfahrensschritte kann demnach gezielt Einfluss auf das Schrumpfverhalten der Strangabschnitte in Längsrichtung und somit auch auf das Äußere der herzustellenden Strangabschnitte genommen werden. Auch hinsichtlich dieses Erfindungsaspektes wird auf die obigen Beschreibungen zur erfindungsgemäßen Vorrichtung Bezug genommen. Gemäß einer bevorzugten Ausgestaltung umfasst das erfindungsgemäße Verfahren einen, mehrere oder sämtliche der nachfolgend aufgeführten Schritte: Fördern zumindest einer Teilmenge der Lebensmittelmasse entlang des rotierbaren Elementes; Abgeben der in einem rotierbaren Zuführrohr geförderten Lebensmittelmasse aus einem Auslass des rotierenden Zuführrohres in einen Abschnitt des feststehenden Gehäuses; Erzeugen einer im Wesentlichen spiralförmigen Ausrichtung der entlang dem feststehenden Abschnitt strömenden Lebensmittelmasse, insbesondere zwischen dem Auslass oder Ende des rotierbaren Elementes und der Austrittsöffnung des feststehenden Gehäuses; axiales Fördern einer Teilmenge der Lebensmittelmasse in Förderrichtung durch einen zwischen dem Zuführrohr und dem feststehenden Gehäuse ausgebildeten, im Wesentlichen ringförmigen Kanal; Zusammenführen der Teilmengen der Lebensmittelmasse vor der Austrittsöffnung des Gehäuses, und Aufbringen eines Hüllmaterials auf die äußere Oberfläche des Lebensmittelstranges, vorzugsweise im Bereich der Austrittsöffnung des feststehenden Gehäuses unter Verwendung eines Koextrusionskopfes.

Bevorzugt wird die Teilmenge der Lebensmittelmasse kontinuierlich entlang des rotierbaren Elementes in Form des rotierbaren Zuführrohr gefördert. Im Falle der Ausgestaltung des rotierbaren Elementes als Zuführrohr wird die Lebensmittelmasse aus einem Auslass des Zuführrohres in einen Abschnitt des feststehenden Gehäuses ausgegeben. Mit dem Ausgeben der Lebensmittelmasse, wobei die Lebensmittelmasse gleichzeitig weiter in Förderrichtung gefördert und auch das rotierbare Element relativ zum feststehenden Gehäuse bewegt wird, erfolgt das Erzeugen einer im Wesentlichen spiralförmigen Ausrichtung der Struktur innerhalb der Lebensmittelmasse. Damit ist gemeint, dass die Fasern der Lebensmittelmasse eine spiralförmige Ausrichtung um die Längsachse des erzeugten Stranges aufweisen. Das Erzeugen dieser spiralförmigen Ausrichtung erfolgt insbesondere zwischen dem Auslass des Zuführrohres und der Austrittsöffnung des Gehäuses. In einer Ausgestaltung, in der um das Zuführrohr und das feststehende Gehäuse ein ringförmiger Kanal ausgebildet ist, strömt sowohl eine Teilmenge der Lebensmittelmasse durch das Zuführrohr als auch eine Teilmenge der Lebensmittelmasse durch den Ringkanal zwischen Zuführrohr und feststehendem Gehäuse. Beide Teilmengen werden dann bevorzugt nach dem Passieren des Endes des Zuführrohres wieder zu einer gemeinsamen Lebensmittelmasse zusammengeführt. In einer weiteren bevorzugten Ausführungsform wird kurz bevor oder mit dem Abgeben der Lebensmittelmasse aus der Austrittsöffnung am feststehenden Gehäuse ein Hüllmaterial auf die Außenseite des erzeugten Stranges aufgebracht. Bevorzugt wird das Hüllmaterial vollumfänglich auf die Außenfläche des Lebensmittelstranges aufgetragen. Das Hüllmaterial ist vorzugsweise ein aushärtbares Hüllmaterial, wie beispielsweise Alginat oder Collagen.

Die zur erfindungsgemäßen Vorrichtung beschriebenen bevorzugten Ausführungsformen bzw. Weiterbildungen sind zugleich auch bevorzugte Ausführungsformen der erfindungsgemäßen Maschine zum Herstellen eines Stranges bzw. des Verfahrens zum Erzeugen eines Stranges aus einer Lebensmittelmasse. Zur Maschine bzw. zum Verfahren beschriebene Ausführungsformen sind zugleich auch bevorzugte Ausführungsformen der verschiedenen Aspekte der erfindungsgemäßen Vorrichtung.

Die Erfindung wird im Folgenden anhand eines bevorzugten Ausführungsbeispiels unter Bezugnahme auf die beigefügten Figuren näher beschrieben. Hierbei zeigen:
- Fig. 1:: eine perspektivische Ansicht einer Maschine zum Herstellen eines Stranges aus einer Lebensmittelmasse mit einer erfindungsgemäßen Vorrichtung sowie einer Weiterverarbeitungseinrichtung;
- Fig. 2:: eine Vorderansicht der erfindungsgemäßen Maschine nach Fig. 1;
- Fig. 3:: eine perspektivische Ansicht der erfindungsgemäßen Vorrichtung zum Verarbeiten der Lebensmittelmasse;
- Fig. 4:: eine vereinfachte Prinzipdarstellung der Funktionsweise der erfindungsgemäßen Vorrichtung;
- Fig. 5:: eine perspektivische Ansicht der erfindungsgemäßen Vorrichtung im Schnitt;
- Fig. 6:: eine Vorderansicht der Vorrichtung nach Fig. 5 im Schnitt;
- Fig.7:: eine Detailansicht eines an der Austrittsöffnung der erfindungsgemäßen Vorrichtung angeordneten Extrusionskopfes, und
- Fig.8:: eine perspektivische Ansicht einer nicht zur Erfindung gehörenden Vorrichtung im Schnitt.

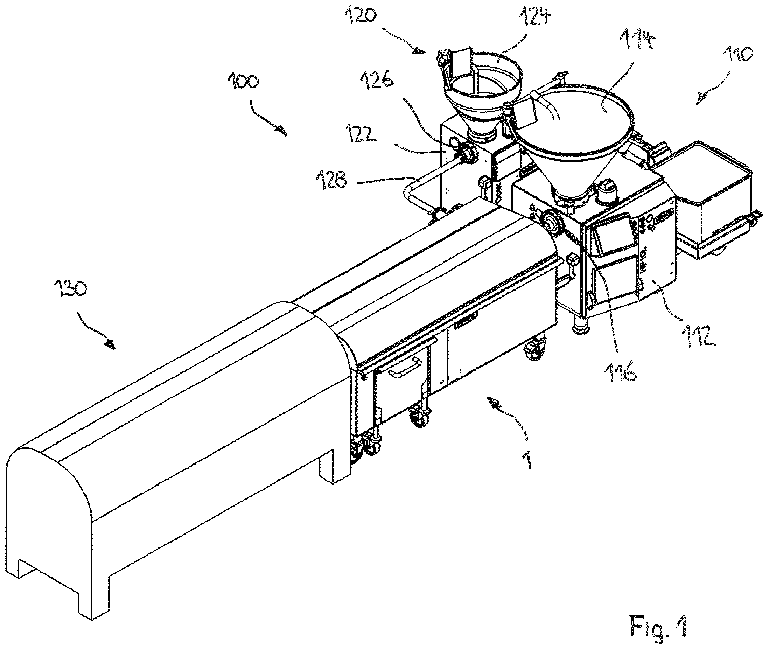

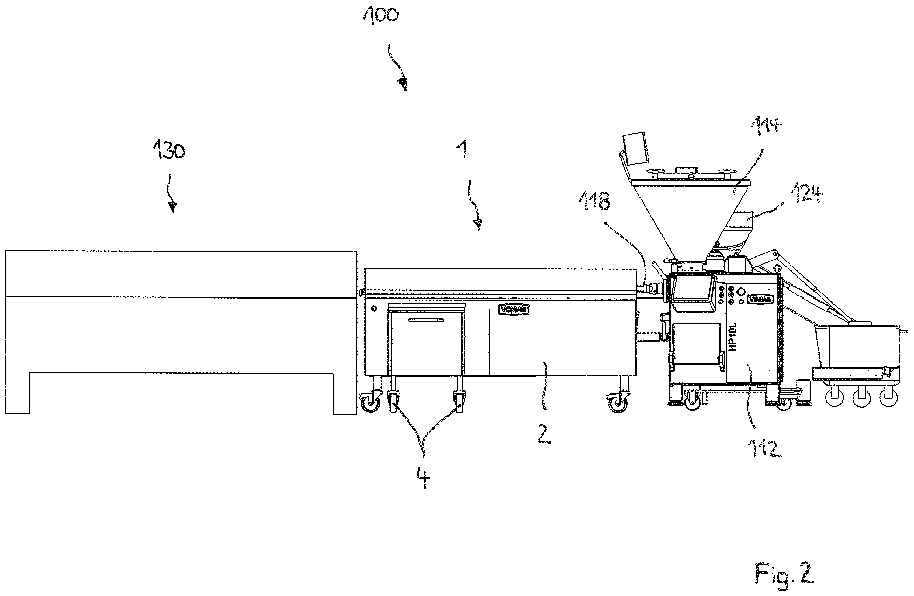

Fig. 1 und 2 zeigen eine Maschine 100 zum Herstellen eines Wurststranges aus einer Lebensmittelmasse wie Wurstbrät oder dergleichen. Die Maschine 100 umfasst eine Füllmaschine 110, mittels derer die als Rohmasse vorliegende Lebensmittelmasse zu einem kontinuierlich geförderten Strang verarbeitet wird. Die Füllmaschine 110 umfasst ein Gehäuse 112 und einen am Gehäuse 112 angeordneten Fülltrichter 114 zum Eingeben der zu verarbeitenden Lebensmittelmasse. Innerhalb der Füllmaschine 110 ist eine nicht näher gezeigte Fördereinrichtung vorgesehen. Mittels der Fördereinrichtung, welche in einer Ausführungsform als Förderpumpe ausgebildet ist, wird die Lebensmittelmasse in Richtung eines Füllmaschinenanschluss 116 an der Füllmaschine 110 gefördert. Die Füllmaschine 110 ist über eine Verbindungsleitung 118 mit der erfindungsgemäßen Vorrichtung 1 zum Verarbeiten der Lebensmittelmasse verbunden.

Die Maschine 100 umfasst ferner eine ähnlich wie eine Füllmaschine ausgebildete Fördermaschine 120 für ein die Lebensmittelmasse umgebendes Hüllmaterial mit einem Gehäuse 122 und einem daran angeordneten Fülltrichter 124. Der Fülltrichter 124 ist zum Aufnehmen des auf die Außenseite des zu erzeugenden Stranges aufzubringenden Hüllmaterials ausgebildet. Als Hüllmaterial wird beispielsweise Alginat oder Collagen verwendet. Innerhalb des Gehäuse 122 ist ein nicht näher gezeigtes Förderwerk angeordnet. Mittels des Förderwerkes wird das Hüllmaterial aus dem Fülltrichter 124 abgezogen und unter Druck gesetzt. Das Förderwerk, das als Förderpumpe ausgebildet sein kann, fördert das Hüllmaterial über einen Fördermaschinenanschluss 126 und eine damit verbundene Verbindungsleitung 128 in Richtung der Vorrichtung 1 zum Verarbeiten der Lebensmittelmasse.

Wie Fig. 1 und 2 ferner zeigen, ist die Vorrichtung 1 zum Verarbeiten der Lebensmittelmasse der Füllmaschine 110 unmittelbar in Förderrichtung der Lebensmittelmasse nachgeordnet, welche über die Verbindungsleitung 118 den kontinuierlich oder auch taktend geförderten Lebensmittelstrang der Lebensmittelmasse empfängt. Das Hüllmaterial für den zu erzeugenden Strang wird der Vorrichtung 1 hingegen von einer Längsseite aus zugeführt.

Die Vorrichtung 1 umfasst ein verfahrbares Gestell 2, an dessen Unterseite Rollen 4 angeordnet sind. Mittels der Vorrichtung 1 wird die Lebensmittelmasse bzw. der aus der Lebensmittelmasse erzeugte Strang verarbeitet. Vorliegend wird mittels der Vorrichtung 1 auf die Außenseite des bevorzugt kontinuierlich geförderten Lebensmittelstranges ein Hüllmaterial aufgebracht. Das Hüllmaterial wird vorzugsweise unter Verwendung eines flüssigen Hilfsstoffes auf der Außenseite des Stranges beschleunigt verfestigt. In einer Ausführung erfolgt mittels der Vorrichtung 1 selbst bzw. mithilfe einer der Vorrichtung 1 nachgeschalteten Weiterverarbeitungseinrichtung 130 das Unterteilen des Lebensmittelmasse-Stranges in einzelne Strangabschnitte. Insbesondere werden von einem bevorzugt kontinuierlich geförderten Wurststrang nacheinander einzelne Würste abgetrennt. Mittels der Vorrichtung 1 wird insbesondere Einfluss auf die Struktur des erzeugten Lebensmittelstranges und damit insbesondere auf dessen Schrumpfverhalten genommen. Dies wirkt sich insbesondere vorteilhaft auf einen der Herstellung der Strangabschnitte nachgeschalteten Kochprozess aus.

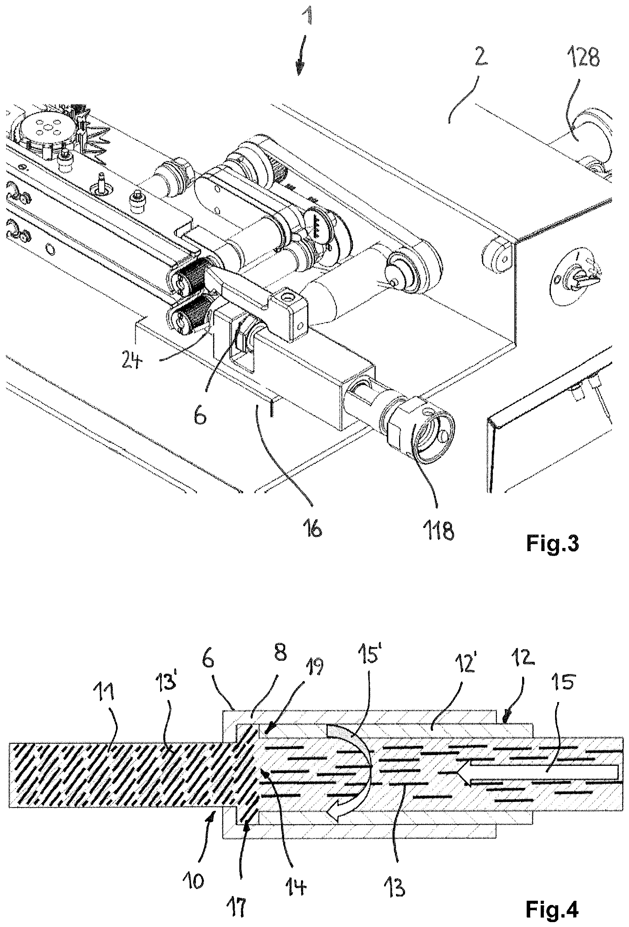

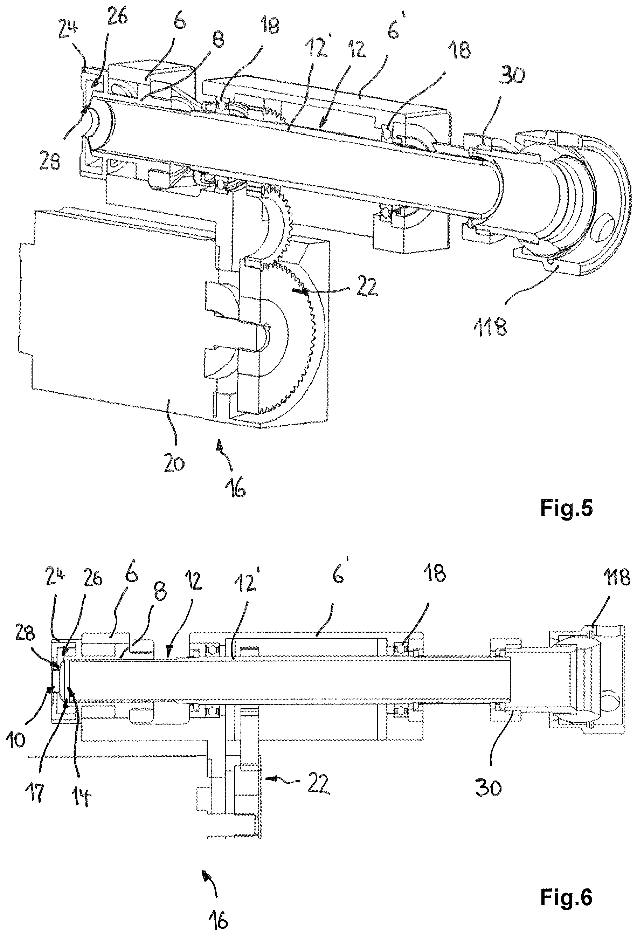

Fig. 3 zeigt eine Detailansicht der erfindungsgemäßen Vorrichtung 1 zum Verarbeiten der Lebensmittelmasse. An dem Gestell 2 der Vorrichtung 1 ist ein Gehäuse 6, 6' mit einer feststehenden Wandung 8 angeordnet, welches fluidleitend mit der nicht näher dargestellten Förderpumpe der Füllmaschine 110 verbindbar ist. Das Gehäuse 6 weist eine Austrittsöffnung 10 (Fig. 4, 5) zum Abgeben der Lebensmittelmasse-Stranges 11 (Fig.4) aus der Vorrichtung 1 auf. Innerhalb des feststehenden Gehäuses 6, 6' ist ein relativ zur Wandung 8 rotierbares Element 12 zum teilweisen Verwirbeln der Lebensmittelmasse innerhalb des Gehäuses 6 angeordnet. Das rotierbare Element 12 ist in einer Ausführungsform der Erfindung als rotierbar gelagertes, vorzugsweise antreibbares Zuführrohr ausgebildet, durch welches im Betrieb mindestens eine Teilmenge der zu fördernden Lebensmittelmasse strömt. Zudem endet das rotierbare Element 12 innerhalb des Gehäuses 6 vor dessen Austrittsöffnung 10 zum Abgeben der Lebensmittelmasse.

Das rotierbare Element 12 erstreckt sich also in Richtung seiner Längsachse nicht bis an die Austrittsöffnung, sondern hält einen Abstand zu dieser, sodass zwischen dem Ende des rotierbaren Elements 12 und der Austrittsöffnung ein Teilraum 17 (Fig.4) innerhalb des Gehäuses 6 ausgebildet. In diesen, vorzugsweise sich etwas erweiternden Teilraum 17 strömt im Betrieb Lebensmittelmasse ein.

In einer bevorzugten Ausgestaltung, in der das rotierbare Element 12 als Zuführrohr ausgebildet ist, endet dessen Auslass 14 im Abstand vor der Austrittsöffnung 10 des Gehäuses 6 mit seiner feststehenden Wandung 8. Gemäß einer bevorzugten Ausführungsform liegt der Abstand zwischen der Austrittsöffnung des Gehäuses und dem Auslass des Zuführrohres im Bereich von > 0 bis etwa 50 mm. Damit ist erreicht, dass die Lebensmittelmasse durch das rotierbare Element 12 im Bereich zwischen dessen Ende und der Austrittsöffnung 10 des Gehäuses 6, also dem Teilraum 17 weniger oder nicht mehr mitbewegt wird. In diesem Teilraum 17 des Gehäuses 6 wird die Lebensmittelmasse primär in axialer Richtung des feststehenden Gehäuses bewegt.

Wie beispielhaft aus Fig. 4 und Fig. 5 entnehmbar, ist ein als Zuführrohr ausgebildetes rotierbares Element 12 konzentrisch innerhalb des Gehäuses 6 angeordnet. Das rotierbare Element 12 ist mittels zweier Drehlager 18 drehbar am Gehäuse 6' aufgenommen und wird mittels einer Antriebseinheit 16 relativ zum feststehenden Gehäuse 6, 6' in Rotation bzw. eine Drehbewegung versetzt. Das rotierbare Element 12 ist dazu eingerichtet, zumindest eine Teilmenge der zu fördernden Lebensmittelmasse beim Durchströmen des Gehäuses 6 in seiner Längsrichtung zusätzlich in eine Bewegung mit mindestens einer rotatorischen Bewegungskomponente relativ zur Längsachse des Gehäuses 6 zu versetzen.

Aus Fig. 4 wird ersichtlich, wie speziell beim Übergang vom Endbereich 19 des rotierbaren Elements in das feststehende Gehäuse 6 in dessen Teilraum 17 bewirkt ist, dass die Struktur der zwischen der Austrittsöffnung 10 des Gehäuses 6 und dem Auslass 14 des rotierbaren Elements 12 strömenden Lebensmittelmasse, aufgrund der Förderbewegung der Lebensmittelmasse in Förderrichtung (Pfeil 15) und der Rotationsbewegung (Pfeil 15') des Zuführrohres 12 relativ zu dem feststehenden Gehäuse 6, eine inhomogenere, vorzugsweise teilweise oder im Wesentlichen spiralförmige Ausrichtung erhält. Innerhalb des Zuführrohres 12 sind die Fasern 13 der geförderten Lebensmittelmasse noch mehr parallel in Förderrichtung der Lebensmittelmasse ausgerichtet. Nach Austreten der Lebensmittelmasse aus dem Auslass 14 des Zuführrohres bzw. mit Übertritt aus dem Wirkbereich des rotierbaren Elementes 12 in das Gehäuse 6 mit seiner feststehenden Wandung 8 werden die Fasern 13' der Lebensmittelmasse anderes ausgerichtet. Nach Verlassen der Austrittsöffnung 10 am Gehäuse 6 weist der Lebensmittelmasse-Strang 11 inhomogener ausgerichtete Fasern 13' auf, die zum Beispiel wenigstens teilweise oder im Wesentlichen spiralförmig um die Längsachse des feststehenden Gehäuses 6 herum ausgerichtet sind.

In einer nicht näher gezeigten Ausführungsform strömt im Betrieb der erfindungsgemäßen Vorrichtung sowohl durch das rotierbare Zuführrohr als auch durch einen zwischen dem Zuführrohr und dem Gehäuse ausgebildeten, im Wesentlichen ringförmigen Kanal die Lebensmittelmasse koaxial hindurch. Der Innendurchmesser des Gehäuses kann zum Außendurchmesser des rotierbaren Elementes in einem Verhältnis im Bereich von > 1 bis etwa 2 liegen. In einem Abschnitt des Gehäuses 6 kann ein sich in Förderrichtung der Lebensmittelmasse verringernder Strömungsquerschnitt vorgesehen sein.

Das drehbare Element 12, vorliegend das in Fig. 5 und 6 gezeigte Zuführrohr, weist über seine Gesamtlänge einen im Wesentlichen konstanten Strömungsquerschnitt auf. Die Antriebseinheit ist über eine damit gekoppelte, nicht näher gezeigte Steuereinrichtung der Vorrichtung 1 dazu eingerichtet, das rotierbare Element in eine kontinuierliche, einstellbare Drehbewegung zu versetzen. Wie aus Fig. 5 ersichtlich, weist die Antriebseinheit 16 einen Elektromotor 20 auf, der über ein Übertragungsgetriebe 22 die vom Elektromotor erzeugte Drehbewegung auf das rotierbare Element 12 überträgt. Das Zuführrohr 12 ist über ein Kupplungstück 30 mit der Verbindungsleitung 118 der Füllmaschine 110 gekoppelt.

Wie aus den Fig. 5 und 6 ferner ersichtlich, weist das Gehäuse 6 einen Extrusionskopf 24 zum Ausgeben des Stranges der Lebensmittelmasse auf. Der Extrusionskopf 24 ist neben dem Ausgeben der Lebensmittelmasse auch dazu eingerichtet, ein Hüllmaterial auf die Außenseite des erzeugten Stranges aus der Lebensmittelmasse aufzubringen. Der Extrusionskopf 24 ist in der gezeigten Ausführungsform als Koextrusionskopf ausgebildet.

Der Extrusionskopf 24 ist bevorzugt fest am Maschinengestell 2 der erfindungsgemäßen Vorrichtung ortsfest gelagert. Der Extrusionskopf 24 weist eine Aufnahmekammer 26 für das auf die Außenseite des Stranges aus der Lebensmittelmasse aufzubringende Hüllmaterial auf. Das Hüllmaterial ist ein fließfähiges, aber aushärtbares Hüllmaterial, wie beispielsweise Alginat oder Collagen.

Die Aufnahmekammer 26 für das Hüllmaterial des Extrusionskopfes 24 weist eine Auslassöffnung 28 auf, die insbesondere der Austrittsöffnung 10 des Gehäuses 6 zum Abgeben des Lebensmittelstranges zugeordnet ist. Dadurch wird das fließfähige Hüllmaterial direkt auf die Oberfläche des ausgegebenen Stranges aufgebracht. Insbesondere ist die Auslassöffnung 28 als Ringspalt ausgebildet, über den das Hüllmaterial im Wesentlichen in radialer Richtung nach innen auf die Oberfläche des erzeugten Stranges abgegeben wird.

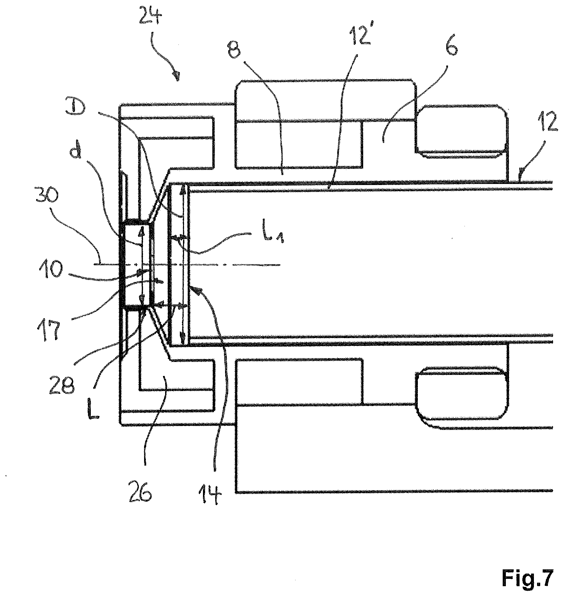

In Fig. 7 ist der Extrusionskopf 24 als Detailansicht im Bereich der Austrittsöffnung 10 der erfindungsgemäßen Vorrichtung 1 (Fig.3) gezeigt, der als Koextrusionskopf ausgebildet ist. Das Gehäuse 6 der Vorrichtung 1 bildet Teile des Extrusionskopfes 24, wobei das rotierbare Element 12 als Zuführrohr für Lebensmittelmasse ausgebildet ist. Das rotierbare Element 12 ist relativ zur Wandung 8 innerhalb des Gehäuses 6 bewegbar. Vorliegend rotiert das rotierbare Element 12 um die Mittenachse 30 des feststehenden Gehäuses 6.

Der Auslass 14 des Zufuhrrohres 12 endet im Abstand vor der Austrittsöffnung 10 des feststehenden Gehäuses 6. Zwischen dem Ende des als Zuführrohr ausgebildeten rotierbaren Elements 12 und dem Ende des feststehenden Gehäuses ist ein Teilraum 17 ausgebildet. Der Teilraum 17 weist eine Länge L und einen Durchmesser D auf.

Der Durchmesser D des Teilraumes 17 ist im bevorzugten Ausführungsbeispiel über einem Abschnitt seiner Länge L gleichbleibend und größer als der Außendurchmesser des in dem Gehäuse drehbar aufgenommenen Elementes 12, welches hier bevorzugt als Zuführrohr 12 ausgebildet ist. Über einen Abschnitt der Länge L des Teilraumes 17 verjüngt sich bevorzugt der Durchmesser konisch in Richtung der Austrittsöffnung 10. Der Durchmesser d an der Austrittsöffnung 10 beträgt etwa 50 % des Durchmessers D des Teilraumes 17 im Übergangsbereich vom rotierbaren Element 12 zum feststehenden Gehäuse 6. Die Teillänge I₁ des Teilraumes 17 mit seinem gleichbleibenden Durchmesser D beträgt etwa die Hälfte der Gesamtlänge L des Teilraumes 17.

An die Austrittsöffnung 10 des feststehenden Gehäuses 6 schließt sich unmittelbar die Auslassöffnung 28 der Aufnahmekammer 26 für das auf die Außenseite des zu erzeugenden Stranges der Lebensmittelmasse aufzubringenden Hüllmaterial an. Die Auslassöffnung 28 für das Hüllmaterial weist in der gezeigten Ausführung eine radiale Ausrichtung auf.

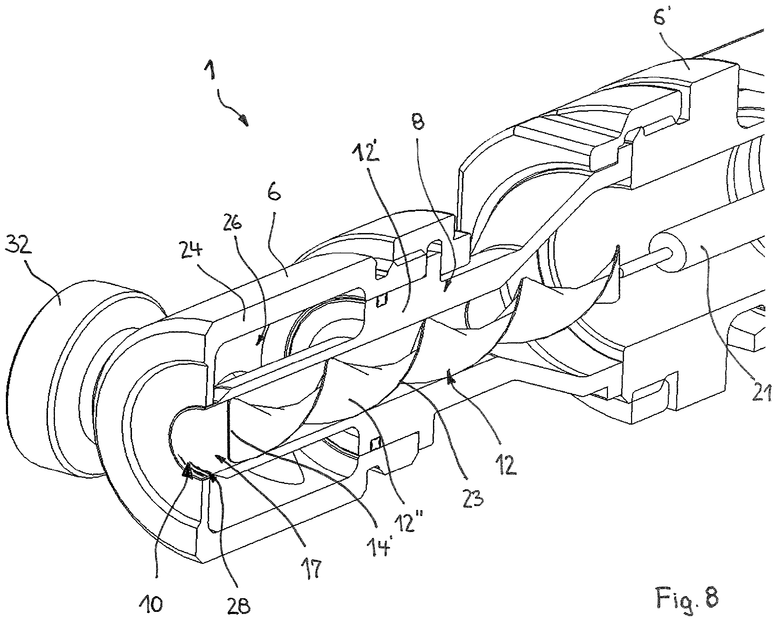

Figur 8 zeigt eine Ausführungsform einer nicht zur Erfindung zählenden Vorrichtung 1, mit einem Gehäuse 6, 6`. Das Gehäuse 6 umfasst eine feststehende Wandung 8, welche in der gezeigten Ausführung als feststehendes Zuführrohr 12' ausgebildet ist. Innerhalb des feststehenden Zuführrohres 12' ist ein rotierbares Element 12 angeordnet. Das rotierbare Element 12 ist ein Verwirbler 12", das an einem in dem Gehäuse 6' drehbar angeordneten Stabelement 21 angeordnet ist und sich in Richtung der Austrittsöffnung 10 des feststehenden Gehäuses 6 erstreckt.

Der Verwirbler 12" weist in der gezeigten Ausführung eine Spirale 23 auf. Mit der Spirale 23 wird die Lebensmittelmasse, welche durch das feststehende Zuführrohr 12' gefördert wird, in eine Bewegung mit einer zusätzlich rotatorischen Bewegungskomponente versetzt.

Das als Verwirbler 12" ausgebildete rotierbare Element 12 hat ein Ende 14`, dass im Abstand vor der Austrittsöffnung 10 am feststehenden Gehäuse 6 endet. Die Spirale 23 hat einen Außendurchmesser, der geringfügig kleiner als der Innendurchmesser des feststehenden Zuführrohres 12' ist.

Der Verwirbler 12" hat nicht die Funktion die Lebensmittelmasse durch das feststehende Gehäuse 6 in Längsrichtung zu fördern. Auch an der Vorrichtung 1 ist ein Teilraum 17 ausgebildet, innerhalb dem das Lebensmittel in eine Bewegung mit zumindest einer rotatorischen Bewegungskomponente versetzt wird. Der Verwirbler 12" ist koaxial innerhalb des Zuführrohres 12', dessen Querschnitt sich entlang eines Abschnittes konisch verjüngt, aufgenommen und relativ zur Wandung 8 bewegbar.

Im Bereich der Austrittsöffnung 10 des feststehenden Zuführrohres 12' ist ein Extrusionskopf 24 als Teil des Gehäuses 6 der Vorrichtung 1 angeordnet. Der Extrusionskopf 24 ist fest am Maschinengestell 2 der Vorrichtung 1 aufgenommen. Der Extrusionskopf 24 weist eine Aufnahmekammer 26 für das auf die Außenseite des Stranges aus der Lebensmittelmasse aufzubringende Füllmaterial auf. Der Extrusionskopf 24 weist einen Hüllmaterial-Einlass 32 für das dem Extrusionskopf 24 zugeführte Füllmaterial auf, der mit dem Fördermaschinenanschluss 126 der Fördermaschine 120 (Fig.1) für das Füllmaterial fluidleitend verbunden ist. Auch der Extrusionskopf 24 weist eine Auslassöffnung 28 auf, die insbesondere der Austrittsöffnung 10 am Gehäuse 6 zugeordnet ist. Die Auslassöffnung 28 ist ein in radialer Richtung auf die Oberfläche des erzeugten Lebensmittelstranges gerichteter Ringspalt.

Das rotierbare Element weist in einer alternativen bevorzugten Ausführungsform an seiner äußeren Oberfläche und/oder im Falle der Ausgestaltung als Zuführrohr, an seiner inneren Oberfläche, Vorsprünge und/oder Ausnehmungen auf, um eine erhöhte Reibung zwischen der Oberfläche des rotierbaren Elementes 12 und der geförderten Lebensmittelmasse zu erzeugen.

In einer nicht näher dargestellten alternativen Ausführungsform ist das rotierbare Element anstatt als Zuführrohr als Stabelement ausgebildet, das an seiner äußeren Umfangsfläche mehrere Leitelemente oder Paddel aufweist. Während des Betriebs der erfindungsgemäßen Vorrichtung zum Erzeugen eines Stranges aus der Lebensmittelmasse wird mittels einer nicht näher gezeigten Förderpumpe die Lebensmittelmasse in Förderrichtung entlang des Gehäuses 6 mit der feststehenden Wandung gefördert. Während des Förderns in Förderrichtung wird auf Teile der durch das feststehende Gehäuse geförderten Lebensmittelmasse zusätzlich eine rotatorische Bewegungskomponente um die Längsachse des Gehäuses erzeugt. Dabei wird das Erzeugen der rotatorischen Bewegungskomponente auf die Teile der Lebensmittelmasse vor Erreichen der Austrittsöffnung am Gehäuse 6 beendet. Damit wird innerhalb der Lebensmittelmasse eine im Wesentlichen spiralförmige Ausrichtung der Struktur bzw. der Fasern der Lebensmittelmasse im Übergangsbereich zwischen dem rotierbaren Element und dem nachfolgenden Abschnitt des feststehenden Gehäuses erzeugt.

Mit dem Ausgeben des Stranges der Lebensmittelmasse aus dem feststehenden Gehäuse wird auf die Außenseite des Lebensmittelstranges ein Hüllmaterial aufgebracht, mit dem eine Verfestigung an der Oberfläche des Lebensmittelmasse-Stranges bewirkt wird.

Im Betrieb wird folgendes Verfahren zum Erzeugen eines Stranges aus einer Lebensmittelmasse, insbesondere aus Fleischbrät, ausgeführt:
- Fördern der Lebensmittelmasse in Förderrichtung 15 entlang des Gehäuses 6 mittels einer Förderpumpe;
- während des Förderns Erzeugen von zusätzlich einer rotatorischen Bewegungskomponente auf Teile der Lebensmittelmasse, um die Längsachse des Gehäuses 6 mittels eines innerhalb des Gehäuses (6) angeordneten, vor einer Austrittsöffnung 10 des Gehäuses zum Abgeben der Lebensmittelmasse endenden rotierbaren Elements 12.

Optional können zusätzlich folgende konkreteren Schritte ausgeführt werden:
- Fördern zumindest einer Teilmenge der Lebensmittelmasse entlang des rotierbaren Elementes 12, bevorzugt durch ein rotierbares Zuführrohr;
- Abgeben der in dem Zuführrohr geförderten Lebensmittelmasse aus einem Auslass des rotierenden Zuführrohres in einen Abschnitt des feststehenden Gehäuses;
- Erzeugen einer im Wesentlichen spiralförmigen Ausrichtung der Struktur der entlang dem feststehenden Abschnitt strömenden Lebensmittelmasse, insbesondere zwischen dem Auslass und der Austrittsöffnung des Gehäuses;
- axiales Fördern einer Teilmenge der Lebensmittelmasse in Förderrichtung durch einen zwischen dem Zuführrohr und dem feststehenden Gehäuse ausgebildeten, im Wesentlichen ringförmigen Kanal;
- Zusammenführen der Teilmengen der Lebensmittelmasse vor der Austrittsöffnung des Gehäuses, und
- Aufbringen eines Hüllmaterials auf die äußere Oberfläche des Lebensmittelstranges, vorzugsweise im Bereich der Austrittsöffnung des Gehäuses unter Verwendung eines Koextrusionskopfes.

### Bezugszeichenliste:

- 1: Vorrichtung
- 2: Maschinengestell
- 4: Rollen
- 6, 6`: Gehäuse
- 8: Wandung
- 10: Austrittsöffnung
- 11: Lebensmittelmasse-Strang
- 12: rotierbares Element
- 12': Zuführrohr
- 12": Verwirbler
- 13, 13': Fasern
- 14: Auslass
- 14': Ende
- 15: Förderrichtung
- 15': Rotationsbewegung
- 16: Antriebseinheit
- 17: Teilraum
- 18: Drehlager
- 19: Endbereich
- 20: Elektromotor
- 21: Stabelement
- 22: Übertragungsgetriebe
- 23: Spirale
- 24: Extrusionskopf
- 26: Aufnahmekammer
- 28: Auslassöffnung
- 30: Mittenachse
- 32: Hüllmaterial-Einlass
- L: Länge Teilraum
- I₁: Teillänge
- D: Durchmesser Teilraum
- d: Durchmesser Austrittsöffnung
- 100: Maschine
- 110: Füllmaschine
- 112: Gehäuse
- 114: Fülltrichter
- 116: Füllmaschinenanschluss
- 118: Verbindungsleitung
- 120: Fördermaschine
- 122: Gehäuse
- 124: Fülltrichter
- 126: Fördermaschinenanschluss
- 128: Verbindungsleitung
- 130: Weiterverarbeitungseinrichtung

## Patentansprüche

1. Vorrichtung (1) zum Erzeugen eines Wurststranges aus einer Lebensmittelmasse mit im Wesentlichen zylindrischer Außenkontur insbesondere aus Fleischbrät, mit einem feststehenden, eine Wandung (8) aufweisenden Gehäuse (6), welches fluidleitend mit einer Förderpumpe verbindbar ist und eine Austrittsöffnung (10) zum Abgeben der Lebensmittelmasse aufweist,
wobei innerhalb des Gehäuses (6) ein relativ zur Wandung (8) rotierbares Element (12) zum teilweisen Verwirbeln der Lebensmittelmasse innerhalb des Gehäuses (6) angeordnet ist, und
wobei das rotierbare Element (12) innerhalb des Gehäuses (6) vor der Austrittsöffnung (10) zum Abgeben der Lebensmittelmasse endet,
wobei das rotierbare Element (12) ein Zuführrohr (12') ist, durch das im Betrieb mindestens eine Teilmenge der Lebensmittelmasse hindurchströmt,
und das Zuführrohr (12) innerhalb des feststehenden Gehäuses (6) einen im Wesentlichen konstanten Strömungsquerschnitt hat, um einen Wurststrang mit im Wesentlichen zylindrischer Außenkontur abzugeben.

2. Vorrichtung nach Anspruch 1,
**dadurch gekennzeichnet, dass** der Abstand zwischen der Austrittsöffnung (10) des Gehäuses (6) und dem Auslass (14) oder Ende (14`) des rotierbaren Elementes (12) im Bereich von > 0 bis etwa 100 mm, bevorzugt im Bereich von > 0 bis etwa 50 mm liegt und/oder das rotierbare Element (12) konzentrisch innerhalb des Gehäuses (6) angeordnet ist.

3. Vorrichtung nach Anspruch 1 oder 2,
**dadurch gekennzeichnet, dass** das rotierbare Element (12) vorzugsweise mittels einer Antriebseinheit (16) in Rotation versetzbar ist und dazu eingerichtet ist, zumindest eine Teilmenge der zu fördernden Lebensmittelmasse beim Durchströmen des Gehäuses (6) in Längsrichtung zusätzlich in eine Bewegung mit mindestens einer rotatorischen Bewegungskomponente relativ zur Längsachse des Gehäuses (6) zu versetzen.

4. Vorrichtung nach Anspruch 3,
**dadurch gekennzeichnet, dass** das rotierbare Element (12) dazu eingerichtet ist, die Struktur der im Abschnitt des Gehäuses (6) zwischen dessen Austrittsöffnung und dem Auslass (14) oder dem Ende (14`) des rotierbaren Elementes (12) strömenden Lebensmittelmasse, aufgrund der Relativbewegung zwischen dem Zuführrohr und dem feststehenden Gehäuse (6), im Wesentlichen spiralförmig auszurichten.

5. Vorrichtung nach einem der Ansprüche 1 bis 4,
**dadurch gekennzeichnet, dass** zwischen dem Zuführrohr (12) und dem Gehäuse (6) ein im Wesentlichen ringförmiger Kanal ausgebildet ist.

6. Vorrichtung nach Anspruch 5,
**dadurch gekennzeichnet, dass** der Innendurchmesser des Gehäuses (6) zum Außendurchmesser des rotierbaren Zuführrohres (12) in einem Verhältnis im Bereich von > 1 bis etwa 2 liegt.

7. Vorrichtung nach einem der vorstehenden Ansprüche,
**dadurch gekennzeichnet, dass** das Gehäuse (6) einen Abschnitt mit einem sich in Förderrichtung (15) der Lebensmittelmasse verringernden Strömungsquerschnitt aufweist.

8. Vorrichtung nach einem der vorstehenden Ansprüche,
**dadurch gekennzeichnet, dass** das rotierbare Element (12) mit einer Antriebseinheit (16) gekoppelt ist, die dazu eingerichtet ist, das rotierbare Element (12) bevorzugt in eine kontinuierliche, einstellbare Rotationsbewegung (15`) zu versetzen.

9. Vorrichtung nach einem der vorstehenden Ansprüche,
**dadurch gekennzeichnet, dass** das Gehäuse (6) mit einem Extrusionskopf (24) zum Ausgeben eines Stranges (11) der Lebensmittelmasse kooperiert,
wobei der Extrusionskopf (24) vorzugsweise als Koextrusionskopf zum Ausgeben der Lebensmittelmasse und eines die Lebensmittelmasse umgebenden Hüllmaterials ausgebildet ist.

10. Vorrichtung nach Anspruch 9,
**dadurch gekennzeichnet, dass** der Koextrusionskopf (24) mittels eines Maschinengestells (2) ortsfest gelagert ist und eine Aufnahmekammer (26) für das fließfähige, aushärtbare Hüllmaterial, insbesondere Alginat oder Collagen, aufweist.

11. Vorrichtung nach Anspruch 10,
**dadurch gekennzeichnet, dass** die Aufnahmekammer (26) eine Auslassöffnung (28) aufweist, die vorzugsweise der Austrittsöffnung (10) des Gehäuses (6) zugeordnet ist, sodass das fließfähige Hüllmaterial unmittelbar auf die Oberfläche der Lebensmittelmasse abgegeben wird.

12. Vorrichtung nach Anspruch 11,
**dadurch gekennzeichnet, dass** die Auslassöffnung (28) ein konzentrisch zum Gehäuse angeordneter Ringspalt ist, der dazu eingerichtet ist, das Hüllmaterial im Wesentlichen in radialer Richtung nach innen auf die Oberfläche des erzeugten Stranges abzugeben.

13. Vorrichtung nach mindestens einem der vorstehenden Ansprüche,
**dadurch gekennzeichnet, dass** das rotierbare Element (12) an seiner äußeren Oberfläche und/oder an seiner inneren Oberfläche Vorsprünge und/oder Ausnehmungen, beispielsweise Nuten oder Aufrauungen aufweist, um mit der Lebensmittelmasse eine erhöhte Reibung während der Rotationsbewegung (15`) zu erzeugen.

14. Maschine (100) zum Herstellen eines Wurststranges aus einer Lebensmittelmasse, mit
- einem Fülltrichter zum Aufnehmen der Lebensmittelmasse,
- einer Förderpumpe zum Erzeugen eines Förderstromes der Lebensmittelmasse, und
- einer Vorrichtung (1) zum Erzeugen eines Wurststranges aus einer Lebensmittelmasse mit im Wesentlichen zylindrischer Außenkontur, insbesondere aus Fleischbrät, nach einem der Ansprüche 1 bis 13, und
vorzugsweise mit einer Abteileinrichtung zum Unterteilen des geformten und mit einem Hüllmaterial überzogenen Lebensmittelstranges in einzelne, voneinander getrennte Strangabschnitte und/oder einer Fördermaschine (120), die fluidleitend mit einem Extrusionskopf (24) der Vorrichtung (1) gekoppelt ist.

15. Verfahren zum Erzeugen eines Wurststranges aus einer Lebensmittelmasse mit im wesentlichen zylindrischer Außenkontur, insbesondere aus Fleischbrät, mit den Schritten:
- Fördern der Lebensmittelmasse in Förderrichtung (15) entlang eines Gehäuses (6) mittels einer Förderpumpe;
- während des Förderns Erzeugen von zusätzlich einer rotatorischen Bewegungskomponente auf Teile der Lebensmittelmasse, um die Längsachse des Gehäuses (6) mittels eines innerhalb des Gehäuses (6) angeordneten, vor einer Austrittsöffnung (10) des Gehäuses zum Abgeben der Lebensmittelmasse endenden rotierbaren Elements (12) zum teilweisen Verwirbeln der Lebensmittelmasse,
wobei das rotierbare Element (12) ein Zuführrohr (12') ist, durch das im Betrieb mindestens eine Teilmenge der Lebensmittelmasse hindurchströmt,
und das Zuführrohr (12) innerhalb des feststehenden Gehäuses (6) einen im Wesentlichen konstanten Strömungsquerschnitt hat, um einen Wurststrang mit im wesentlichen zylindrischer Außenkontur abzugeben.

16. Verfahren nach Anspruch 15,
umfassend einen, mehrere oder sämtliche der nachfolgend angeführten Schritte:
- Fördern zumindest einer Teilmenge der Lebensmittelmasse entlang des rotierbaren Elementes (12);
- Abgeben der in einem rotierbaren Zuführrohr (12') geförderten Lebensmittelmasse aus einem Auslass (14) des rotierenden Zuführrohres in einen Abschnitt des feststehenden Gehäuses (6);
- Erzeugen einer im Wesentlichen spiralförmigen Ausrichtung der Struktur der entlang dem feststehenden Abschnitt strömenden Lebensmittelmasse, insbesondere zwischen dem Auslass (14) oder Ende (14`) des rotierbaren Elementes (12) und der Austrittsöffnung des Gehäuses;
- axiales Fördern einer Teilmenge der Lebensmittelmasse in Förderrichtung durch einen zwischen dem Zuführrohr und dem feststehenden Gehäuse ausgebildeten, im Wesentlichen ringförmigen Kanal;
- Zusammenführen der Teilmengen der Lebensmittelmasse vor der Austrittsöffnung des Gehäuses, und
- Aufbringen eines Hüllmaterials auf die äußere Oberfläche des Lebensmittelstranges, vorzugsweise im Bereich der Austrittsöffnung des Gehäuses unter Verwendung eines Koextrusionskopfes.

## Claims

1. Apparatus (1) for producing a sausage string from a foodstuff material with a substantially cylindrical outside contour, in particular from sausagemeat, comprising a stationary housing (6) which has a wall (8) and which can be connected in fluid-conducting relationship to a conveyor pump, and has a discharge opening (10) for delivery of the foodstuff material,
wherein arranged within the housing (6) is an element (12) for partially swirling the foodstuff material within the housing (6), which is rotatable relative to the wall (8), and
wherein the rotatable element (12) ends within the housing (6) before the discharge opening (10) for delivery of the foodstuff material,
wherein the rotatable element (12) is a feed tube (12'), through which in operation at least a partial amount of the foodstuff material flows, and
the feed tube (12') within the stationary housing (6) is of a substantially constant flow cross-section for delivery a sausage string with a substantially cylindrical outside contour.

2. Apparatus as set forth in claim 1
**characterised in that** the spacing between the discharge opening (10) of the housing (6) and the outlet (14) or end (14') of the rotatable element (12) is in the range of > 0 through about 100 mm, preferably in the range of > 0 through about 50 mm and/or the rotatable element (12) is arranged concentrically within the housing (6).

3. Apparatus as set forth in claim 1 or claim 2
**characterised in that** the rotatable element (12) can preferably be set in rotation by means of a drive unit (16) and is adapted to additionally move at least a partial amount of the foodstuff material to be conveyed when flowing through the housing (6) in the longitudinal direction in a movement with at least one rotational movement component relative to the longitudinal axis of the housing (6).

4. Apparatus as set forth in claim 3
**characterised in that** the rotatable element (12) is adapted to orient substantially in a spiral shape the structure of the foodstuff material flowing in the portion of the housing (6) between its discharge opening and the outlet (14) or the end (14') of the rotatable element (12) by virtue of the relative movement between the feed tube and the stationary housing (6).

5. Apparatus as set forth in one of claims 1 through 4
**characterised in that** a substantially annular passage is formed between the feed tube (12) and the housing (6).

6. Apparatus as set forth in claim 5
**characterised in that** the inside diameter of the housing (6) is in a ratio in the range of > 1 through about 2 relative to the outside diameter of the rotatable feed tube (12).

7. Apparatus as set forth in one of the preceding claims
**characterised in that** the housing (6) has a portion with a flow cross-section decreasing in the conveyor direction (15) of the foodstuff material and/or the feed tube (12) within the stationary housing (6) is of a substantially constant flow cross-section.

8. Apparatus as set forth in one of the preceding claims
**characterised in that** the rotatable element (12) is coupled to a drive unit (16) which is adapted to displace the rotatable element (12) preferably in a continuous adjustable rotary movement (15').

9. Apparatus as set forth in one of the preceding claims
**characterised in that** the housing (6) cooperates with an extrusion head (24) for the delivery of a string (11) of the foodstuff material,
wherein the extrusion head (24) is preferably in the form of a co-extrusion head for delivery of the foodstuff material and a casing material surrounding the foodstuff material.

10. Apparatus as set forth in claim 9
**characterised in that** the co-extrusion head (24) is supported stationarily by means of a machine frame (2) and has a receiving chamber (26) for the flowable, hardenable casing material, in particular alginate or collagen.

11. Apparatus as set forth in claim 10
**characterised in that** the receiving chamber (26) has an outlet opening (28) which is preferably associated with the discharge opening (10) of the housing (6) so that the flowable casing material is delivered directly on to the surface of the foodstuff material.

12. Apparatus as set forth in claim 11
**characterised in that** the outlet opening (28) is an annular gap which is arranged concentrically with respect to the housing and which is adapted to deliver the casing material substantially in a radial direction inwardly on to the surface of the string of foodstuff material produced.

13. Apparatus as set forth in at least one of the preceding claims **characterised in that** at its outer surface and/or at its inner surface the rotatable element (12) has projections and/or recesses, for example grooves or roughenings in order to create increased friction with the foodstuff material during the rotational movement (15').

14. A machine (100) for producing a sausage string from a foodstuff material, comprising
- a filling hopper for receiving the foodstuff material,
- a conveyor pump for producing a conveyor flow of the foodstuff material, and
- an apparatus (1) for producing a sausage string from a foodstuff material with a substantially cylindrical outside contour, in particular from sausagemeat, as set forth in one of claims 1 through 13, and
preferably with a dividing device for sub-dividing the foodstuff string which is formed and which is covered with a casing material into individual mutually separated string portions and/or a conveyor machine (120) coupled in fluid-conducting relationship to an extrusion head (24) of the apparatus (1).

15. A method of producing a sausage string from a foodstuff material with a substantially cylindrical outside contour, in particular sausagemeat, comprising the steps:
- conveying the foodstuff material in the conveyor direction (15) along a housing (6) by means of a conveyor pump;
- during the conveying operation producing in addition a rotational movement component on parts of the foodstuff material around the longitudinal axis of the housing (6) by means of a rotatable element (12) for partially swirling the foodstuff material which is arranged within the housing (6) and which ends before a discharge opening (10) of the housing for delivery of the foodstuff material,
wherein the rotatable element (12) is a feed tube (12'), through which in operation at least a partial amount of the foodstuff material flows, and
the feed tube (12') within the stationary housing (6) is of a substantially constant flow cross-section for delivery a sausage string with a substantially cylindrical outside contour.

16. A method as set forth in claim 15 including one, more of all of the steps recited hereinafter:
- conveying at least a partial amount of the foodstuff material along the rotatable element (12),
- delivering the foodstuff material conveyed in a rotatable feed tube (12') out of an outlet (14) of the rotating feed tube into a portion of the stationary housing (6),
- producing a substantially spiral-shaped orientation of the structure of the foodstuff material flowing along the stationary portion, in particular between the outlet (14) or end (14') of the rotatable element (12) and the discharge opening of the housing,
- axially conveying a partial amount of the foodstuff material in the conveyor direction through a substantially annular passage provided between the feed tube and the stationary housing,
- bringing the partial amounts of the foodstuff material together before the discharge opening of the housing, and
- applying a casing material to the external surface of the foodstuff string, preferably in the region of the discharge opening of the housing using a co-extrusion head.

## Revendications

1. Dispositif (1) de production d'un boyau à saucisses à partir d'une pâte alimentaire avec un contour extérieur sensiblement cylindrique, en particulier à partir de farce à base de viande, avec un boîtier (6) immobile présentant une paroi (8), lequel peut être relié de manière à acheminer des fluides à une pompe de refoulement et présente une ouverture de sortie (10) destinée à distribuer la pâte alimentaire,
dans lequel un élément (12) pouvant tourner par rapport à la paroi (8), destiné à faire tourbillonner en partie la pâte alimentaire à l'intérieur du boîtier (6) est disposé à l'intérieur du boîtier (6), et
dans lequel l'élément (12) pouvant tourner se termine, à l'intérieur du boîtier (6), devant l'ouverture de sortie (10) destinée à distribuer la pâte alimentaire,
dans lequel
l'élément (12) pouvant tourner est un tube d'amenée (12'), à travers lequel, lors du fonctionnement, au moins une quantité partielle de la pâte alimentaire s'écoule de part en part, et le tube d'amenée (12) a, à l'intérieur du boîtier (6) immobile, une section transversale d'écoulement sensiblement constante pour distribuer un boyau à saucisses avec un contour extérieur sensiblement cylindrique.

2. Dispositif selon la revendication 1,
**caractérisé en ce que** la distance entre l'ouverture de sortie (10) du boîtier (6) et l'évacuation (14) ou l'extrémité (14') de l'élément (12) pouvant tourner se situe dans la plage de > 0 à environ 100 mm, de manière préférée dans la plage de > 0 à environ 50 mm et/ou l'élément (12) pouvant tourner est disposé de manière concentrique à l'intérieur du boîtier (6).

3. Dispositif selon la revendication 1 ou 2,
**caractérisé en ce que** l'élément (12) pouvant tourner peut être amené en rotation de préférence au moyen d'une unité d'entraînement (16) et est mis au point pour amener au moins une quantité partielle de la pâte alimentaire à refouler lors de l'écoulement à travers le boîtier (6) dans la direction longitudinale en supplément en un déplacement avec au moins une composante de déplacement par rotation par rapport à l'axe longitudinal du boîtier (6).

4. Dispositif selon la revendication 3,
**caractérisé en ce que** l'élément (12) pouvant tourner est mis au point pour orienter sensiblement en forme de spirale la structure de la pâte alimentaire s'écoulant dans le tronçon du boîtier (6) entre son ouverture de sortie et l'évacuation (14) ou l'extrémité (14') de l'élément (12) pouvant tourner en raison du déplacement relatif entre le tube d'amenée et le boîtier (6) immobile.

5. Dispositif selon l'une quelconque des revendications 1 à 4,
**caractérisé en ce qu'**un canal sensiblement annulaire est réalisé entre le tuyau d'amenée (12) et le boîtier (6).

6. Dispositif selon la revendication 5,
**caractérisé en ce que** le diamètre intérieur du boîtier (6) par rapport au diamètre extérieur du tube d'amenée (12) pouvant tourner se situe dans un rapport dans la plage de > 1 à environ 2.

7. Dispositif selon l'une quelconque des revendications précédentes,
**caractérisé en ce que** le boîtier (6) présente un tronçon avec une section transversale d'écoulement se réduisant dans la direction de refoulement (15) de la pâte alimentaire.

8. Dispositif selon l'une quelconque des revendications précédentes,
**caractérisé en ce que** l'élément (12) pouvant tourner est couplé à une unité d'entraînement (16), qui est mise au point pour amener l'élément (12) pouvant tourner de manière préférée dans un déplacement par rotation (15') réglable continu.

9. Dispositif selon l'une quelconque des revendications précédentes,
**caractérisé en ce que** le boîtier (6) coopère avec une tête d'extrusion (24) destinée à distribuer un boyau (11) de la pâte alimentaire,
dans lequel la tête d'extrusion (24) est réalisée de préférence en tant que tête de coextrusion destinée à distribuer la pâte alimentaire et un matériau de revêtement entourant la pâte alimentaire.

10. Dispositif selon la revendication 9,
**caractérisé en ce que** la tête de coextrusion (24) est montée de manière stationnaire au moyen d'un bâti de machine (2) et présente une chambre de réception (26) pour le matériau de revêtement durcissable pouvant s'écouler, en particulier de l'alginate ou du collagène.

11. Dispositif selon la revendication 10,
**caractérisé en ce que** la chambre de réception (26) présente une ouverture d'évacuation (28), qui est associée de préférence à l'ouverture de sortie (10) du boîtier (6) si bien que le matériau de revêtement pouvant s'écouler est distribué directement sur la surface de la pâte alimentaire.

12. Dispositif selon la revendication 11,
**caractérisé en ce que** l'ouverture d'évacuation (28) est une fente annulaire disposée de manière concentrique par rapport au boîtier, qui est mise au point pour distribuer le matériau de revêtement sensiblement dans une direction radiale vers l'intérieur sur la surface du boyau produit.

13. Dispositif selon au moins l'une quelconque des revendications précédentes,
**caractérisé en ce que** l'élément (12) pouvant tourner présente, sur sa surface extérieure et/ou sur sa surface intérieure, des parties faisant saillie et/ou des évidements, par exemple des rainures ou des rugosités, pour produire avec la pâte alimentaire un frottement élevé pendant le déplacement par rotation (15').

14. Machine (100) destinée à fabriquer un boyau à saucisses à partir d'une pâte alimentaire,
avec
- une trémie de remplissage destinée à recevoir la pâte alimentaire,
- une pompe de refoulement destinée à produire un flux de refoulement de la pâte alimentaire, et
- un dispositif (1) destiné à produire un boyau à saucisses à partir d'une pâte alimentaire avec un contour extérieur sensiblement cylindrique, en particulier à partir de farce à base de viande, selon l'une quelconque des revendications 1 à 13, et
de préférence avec un système de division destiné à diviser le boyau alimentaire, façonné et recouvert d'un matériau de revêtement, en tronçons de boyau individuels séparés les uns des autres et/ou une machine de refoulement (120), qui est couplée de manière à acheminer des fluides à une tête d'extrusion (24) du dispositif (1).

15. Procédé destiné à produire un boyau à saucisses à partir d'une pâte alimentaire avec un contour extérieur sensiblement cylindrique, en particulier à partir de farce à base de viande, avec les étapes :
- de refoulement de la pâte alimentaire dans la direction de refoulement (15) le long d'un boîtier (6) au moyen d'une pompe de refoulement ;
- pendant le refoulement, de production d'une composante de déplacement par rotation en supplément sur des parties de la pâte alimentaire autour de l'axe longitudinal du boîtier (6) au moyen d'un élément (12) pouvant tourner disposé à l'intérieur du boîtier (6), se terminant devant une ouverture de sortie (10) du boîtier destiné à distribuer la pâte alimentaire pour faire tourbillonner en partie la pâte alimentaire,
dans lequel l'élément (12) pouvant tourner est un tube d'amenée (12'), à travers lequel l'au moins une quantité partielle de la pâte alimentaire s'écoule de part en part lors du fonctionnement,
et le tube d'amenée (12) a, à l'intérieur du boîtier (6) stationnaire, une section transversale d'écoulement sensiblement constante pour distribuer un boyau à saucisses avec un contour extérieur sensiblement cylindrique.

16. Procédé selon la revendication 15,
comprenant une, plusieurs ou toutes les étapes réalisées ci-après :
- le refoulement d'au moins une quantité partielle de la pâte alimentaire le long de l'élément (12) pouvant tourner,
- la distribution de la pâte alimentaire refoulée dans un tube d'amenée (12') pouvant tourner depuis une évacuation (14) du tube d'amenée pouvant tourner dans un tronçon du boîtier (6) stationnaire ;
- la production d'une orientation sensiblement en forme de spirale de la structure de la pâte alimentaire s'écoulant le long du tronçon immobile, en particulier entre l'évacuation (14) ou l'extrémité (14') de l'élément (12) pouvant tourner et l'ouverture de sortie du boîtier ;
- le refoulement axial d'une quantité partielle de la pâte alimentaire dans la direction de refoulement à travers un canal sensiblement annulaire réalisé entre le tube d'amenée et le boîtier immobile ;
- le regroupement des quantités partielles de la pâte alimentaire devant l'ouverture de sortie du boîtier, et
- l'application d'un matériau de revêtement sur la surface extérieure du boyau alimentaire, de préférence dans la zone de l'ouverture de sortie du boîtier en utilisant une tête de coextrusion.
